# EUROPEAN PATENT APPLICATION

(11) **EP 0 570 646 A1**
(43) Date of publication of application: **24.11.1993**
(21) Application number: 92420162.7
(22) Date of filing: 18.05.1992
(51) Int. Cl.: G06F 9/44

(54) **Method for processor simulation**

(71) Applicant: ADVANCED COMPUTER RESEARCH INSTITUTE S.A.R.L., F-92053 Paris La Défense (FR)
(72) Inventor: Katevenis, Manolis, GR 711/10 Heraklio, Crète (GR)
(74) Representative: de Beaumont, Michel

(57) **Abstract**

The invention relates to a translation method ("translation-execution") of foreign binary code not adapted to a host computer. The translation-execution consists in alternately running a translator program (112) to translate a foreign code block of the program into a host code block and running (104) the just translated host block thereafter. The translator will always suspend (106) translation upon reaching a computed Control Transfer Instruction (CTI) as, at translation time, the corresponding computed label cannot be known. The newly translated host block is then run, whereby the host code, corresponding to the foreign code that would be up to then executed, is run. The label of the foreign computed CTI is then effectively computed and can be found in memory. The translator can then resume the translation of the foreign code starting from the computed label.

## Description

### BACKGROUND OF THE INVENTION

The present invention relates to a method allowing the operation of the computer with foreign executable (or binary) code comprised of instructions which are not executable on the computer.

The binary form is the easiest and most widespread form of software distribution. Even though source code (which is text written in a high level language and which is to be compiled into binary code) is highly desirable in several cases, the danger of its unauthorized use greatly restricts the number of cases where that is supplied to the purchaser. Given a program in binary form, one would like to be able to execute it on as many host computers as possible. This desire leads computer manufacturers to designing machines that are binary compatible with a certain chosen instruction set, thus giving birth to a family of compatible computers.

As many different families exist, attempts have been made to achieve binary code translations in order to run software adapted to a specific family on another family. A binary code translation would consist in considering a binary program as a data file, locating and examining each instruction in the file, and then generating one or more instructions of the host instruction set which perform the exact equivalent operations. By putting these new instructions together, an equivalent binary program in the host instruction set should result. However, binary code translation faces serious problems that make it inapplicable to most practical cases.

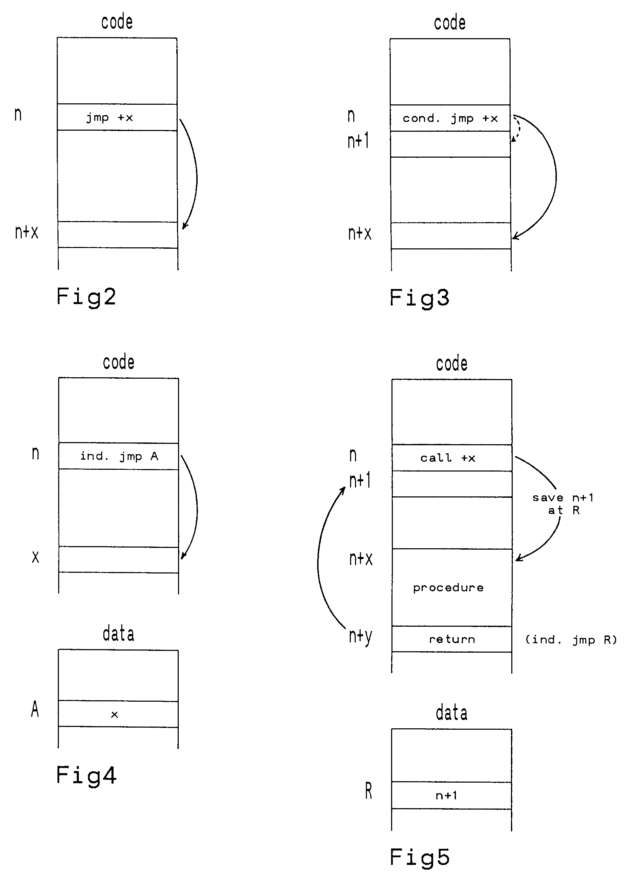

Binary translation generally does not preserve code size, i.e. each instruction occupies a certain number of bytes and, generally, corresponds to one or more translated instructions which occupy a different number of bytes. The fundamental problem faced by binary translation is thus how to translate control transfer instructions (CTI's) which are instructions that cause the execution of the code to be continued at any location within the code. The four most common CTI's will be described hereafter by referring to Figures 2 to 5. To better understand some elementary mechanisms of the execution of instructions, an exemplary computer architecture and program memory environment will be described.

### COMPUTER ARCHITECTURE AND MEMORY ENVIRONMENT

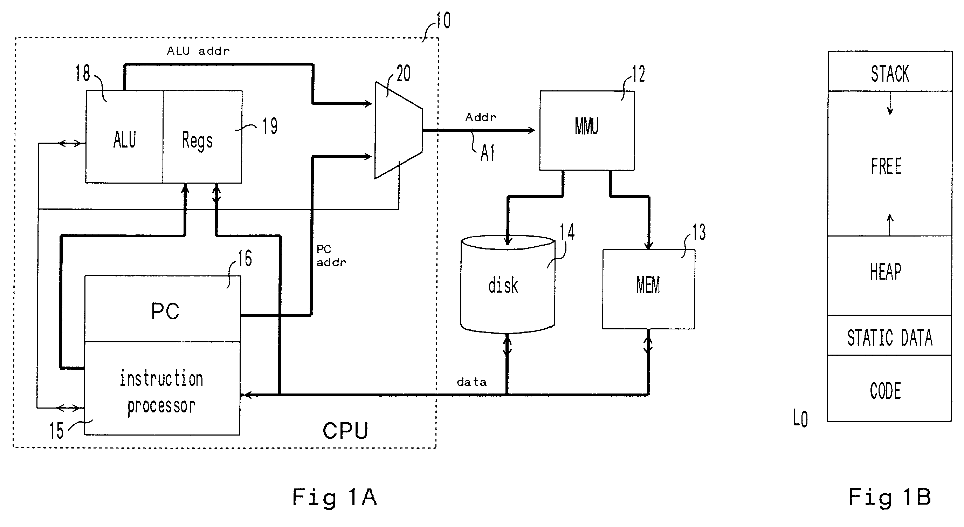

Figure 1A very schematically represents an exemplary computer architecture. Such an architecture is described in more detail in "Reduced Instruction Set Computer Architectures for VLSI" by M. Katevenis, MIT Press, Cambridge, Massachussets, 1985, ISBN 11103-9 KATCH. A Central Processing Unit (CPU) 10 is connected via an address bus A1 to a Memory Management Unit (MMU) 12. This MMU can map the address on bus A1, or CPU address, to different areas in different types of memory devices in the computer, especially the main memory (RAM) 13 and a mass storage device, such as a hard disk 14. The CPU accesses the memory devices through a data bus and a control bus (not represented).

The CPU comprises an instruction processor 15 connected to the data bus and associated to a program counter (PC) 16. The CPU also comprises an arithmetic and logic unit 18 associated to a set of registers 19 on which it performs various operations indicated by the instruction processor through internal control signals. The registers 19 are connected to the data bus and, as shown, can also receive information (such as addresses used by instructions) from the instruction processor. The CPU addresses are issued either by the PC or by the ALU. The PC or ALU addresses are selected by a multiplexer 20 suitably controlled by the instruction processor.

The task of the MMU is to map the CPU addresses to physical addresses corresponding to disk or RAM space (physical space). This allows to affect to each loaded program a same memory environment, often called virtual memory space, which can be partially on disk and partially in RAM. A virtual memory space, seen by the program it is affected to, is such that its addresses (virtual addresses) start at a specific value common to all virtual spaces. The common virtual addresses are then mapped to different physical addresses by the MMU. This is to relieve the programs of the memory management. One program being active at a time (only one instruction at a time can be executed), the task of the Operating System is to inform the MMU about which virtual space is currently being used so that the MMU can map it correspondingly.

A program executing in a first virtual space can access a second virtual space through appropriate mapping that maps both of these virtual spaces (or portions thereof) to the same physical memory location. Thus, access to certain memory areas can be allowed to specified programs and denied to others, as set by their respective mappings.

Figure 1B represents an exemplary memory environment or virtual memory space, which will also be referred to as "memory", of a loaded program. The program code is loaded in a code space starting at an address L₀, for example near the bottom of the memory. The remaining memory affected to the program is data space. In an area near the bottom of the data space, static data are stored. Above the static data there is what is called the "heap", which is an area where the dynamically allocated data used by the program are stored. This heap grows upwards. At the top of the data space is what is called the "stack" which is memory used by the program to store temporary data. The stack grows downwards. The data space between the stack and the heap is free. In many cases, the code space also comprises data in the form of constants used by the program.

When a program is executed, the mechanism is the following in the architecture as represented in Figure 1A. The PC contains the address of, or points at, the current instruction to be executed in the program. This PC address is provided to the MMU and the corresponding instruction in the code space is fetched via the data bus and loaded into the instruction processor 15. The instruction processor will then generate corresponding events through the various lines connected thereto, such as performing operations on the contents of registers, reading or writing in memory and providing corresponding ALU addresses...

If the loaded instruction is not a Control Transfer Instruction (CTI), once the corresponding events are generated, the content of the PC is incremented by 1, and the new corresponding instruction is fetched in memory.

If the loaded instruction is a CTI, the event generated by this instruction is the incrementation of the PC by an offset or the loading into the PC of a new instruction address. To each CTI is attached a constant which is either the offset or a location at which the new instruction address must be fetched.

### VARIOUS TYPES OF CONTROL TRANSFER INSTRUCTIONS

In Figures 2 to 5 are shown columns that represent code and data memory spaces, wherein the successive rows of the code columns correspond to successive instructions. Values indicated beside the columns correspond to the addresses of the facing rows in the columns. The address contained in the Program Counter (PC) of Figure 1A will hereafter be designated "PC".

### Unconditional Jump

Figure 2 represents a so-called unconditional jump instruction located at an address n of the code space. This instruction directly transfers control to address n+x by incrementing the PC by a constant offset x. Hereafter, an address to which control is transferred will be referred to as "label".

If it is wished to achieve a program translation, this jump instruction must be translated into an equivalent jump instruction but, as the instructions must be translated sequentially in order to locate them correctly, when the jump instruction at address n is reached, eventual instructions comprised between addresses n and n+x have not yet been translated, so it is impossible to know the size of the translation of these eventual instructions; the label to which the translated jump instruction must transfer control to is therefore unknown.

Furthermore, the space between addresses n and n+x might very well contain data. In this case, if the translation proceeds, this data would be interpreted as instructions and translated into corresponding instructions. The translated code will then have erroneous data.

### Conditional Jump

Figure 3 represents a so-called conditional jump instruction, or branch, located at an address n of the code space. This instruction transfers control to a label n+x if an associated condition is true. This condition can be, for example, a zero result in a register, an arithmetic operation generating a carry, the result of a comparison... If the condition is false, the execution of the code continues immediately after the conditional jump instruction at label n+1.

The problems for translating a conditional jump are basically the same as for translating an unconditional jump (Figure 2) except that the space immediately after address n normally contains code and not data.

### Computed Jump

Figure 4 represents a so-called computed or indexed jump instruction located at an address n of the code space. This instruction transfers control to a label x stored in a known location A. Location A can be a predetermined register or, as shown, a location at address A in the data space. This label x is called a computed label (in opposition to the other labels which are usually called static labels) because it is determined at run-time (while the program is executed). The label is either computed by the program itself or it is determined by a choice of a user; for example, if the user chooses in a displayed menu a certain action to be carried out by the program, control is transferred to a label corresponding to this choice.

Thus, the main problem in translating the computed jump is that the computed label which is stored at run-time at location A is generally one among a plurality of possible labels. Unless it is possible to locate at translation time in the program a table containing all the possible contents of location A, if such a table exists, the translation cannot proceed.

### Subroutine Call

Figure 5 represents a so-called subroutine call instruction located at an address n of the code space. This instruction transfers control to a procedure starting at a label n+x and finishing by a return instruction at an address n+y. On executing a subroutine call at PC=n, the subroutine return label is saved at "R", and an unconditional jump to label n+x is achieved. Reference "R" can designate a register or, as shown, an address of a data space location. The return label is the address to which control must be transferred after execution of the subroutine, and is commonly the address, PC+1=n+1, of the instruction immediately following the subroutine call instruction. The return instruction, at label n+y, is equivalent to a computed jump to the label stored at "R".

Thus, the problem of translating a computed jump is also encountered in the translation of a subroutine call.

Any other type of CTI, such as a computed subroutine call, a conditional subroutine call... is a combination of the four above described CTI's.

In addition to the above mentioned problems, there are programs which behave in a particular way which increases the translation difficulties. Some programs perform arithmetic operations on the binary values of their own instructions (code is interpreted as data), such as checksums, as a measure against unauthorized modification of the programs. Some other programs, such as self decompressing or self compiling programs, modify themselves. In the former case, the translated programs would perform checksums on translated instructions which do not correspond to the same data as the original ones. The checksums would thus fail in the translated programs. In the latter case, self modifying instructions write data (corresponding to instructions) at specific locations in the code space. The translated self modifying instructions would write exactly the same data (then corresponding to erroneous instructions) at locations which, moreover, are eventually wrong because of non-preserved code size.

### SUMMARY OF THE INVENTION

An object of the invention is to enable the operation of a computer with binary code not adapted to this computer.

Another object of the invention is, more particularly, to overcome computed CTI translation problems.

Another object of the invention is, more particularly, to overcome translation problems of instructions performing arithmetic operations on code.

Another object of the invention is, more particularly, to overcome translation problems of instructions performing code modifications.

Another object of the invention is to improve performance by providing a hardware assistance.

The invention achieves these objects by what will be called hereafter a "translation-execution" of the foreign program by which the computer is to be operated. The translation- execution consists in alternately running a translator program to translate a foreign code block of the program into a host code block and running the just translated host block thereafter. The host blocks are run in the order the corresponding foreign blocks would be run if the foreign program were executed on an adapted foreign computer. The translator therefore foresees which foreign instructions would be executed on the foreign computer at the end of the previously translated foreign block, and only translates those instructions. This normally ensures that the translator will always be translating effective foreign instructions and not interpreting anything else as foreign instructions.

The translator will always suspend translation upon reaching a computed CTI as, at translation time, the corresponding computed label cannot be known. The newly translated host block is then run, whereby the host code, corresponding to the foreign code that would be up to then executed, is run. The label of the foreign computed CTI is then effectively computed and can be found in memory. The translator can then resume the translation of the foreign code starting from the computed label.

In order to be sure that the translated code executes correctly and that the computed labels assume correct values which the translator will be able to locate, the translator translates foreign instructions into host instructions having the same effects upon the state of the machine as the foreign instructions would have if they were executed on a suitable computer; it is meant by this, for example, that foreign instructions manipulating specific data and specific data locations are translated into host instructions manipulating in the same way the same data and the same locations. Thus, once a host block has been run, any computed label will both have the value and be at the location expected by the foreign program.

If foreign instructions perform arithmetic operations on their code, it means that the foreign code is accessed as data in memory. As the translated instructions have the same effects on the memory as the foreign instructions would have, the foreign instructions performing these operations will be translated into instructions performing the same operations on the foreign code and not on the host code; the operations will therefore be successful.

If foreign instructions modify their code, which again means that the foreign code is accessed as data, these modifying instructions will be translated into host instructions accordingly modifying the foreign code and not the host code. Once the foreign code is modified, the translator program will have to and will be able to correctly retranslate the modified portions of the foreign code.

It will be noted that a complete translation of the foreign program will only very exceptionally be generated. Indeed, if possibilities of the foreign program are not exploited by the user, the foreign code corresponding to these possibilities might never be translated. Thus, in case those possibilities are exploited some time, both the foreign program and the available host code must remain in memory and be processed according to the invention.

The invention more particularly concerns a method for operating a host computer with foreign binary code comprised of foreign instructions not executable on this computer, comprising the steps of a) storing the foreign code in a memory; b) choosing a memory space wherein host instructions are to be stored; c) examining the foreign instructions, translating them into host instructions having the same effects on the state of the machine as the foreign instructions would have if they were executed on a suitable computer, and storing the host instructions in said memory space; upon reaching a Control Transfer Instruction (CTI) to a computed foreign label to be found at a specific location, generating in said memory space a group of host instructions which, when executed, will read the foreign label at said specific location, search in a table for an associated host label, and either transfer control to the associated host label if it is found, or generate a trap; d) suspending the examining step and executing the newly translated host instructions; e) when a trap is generated due to the execution of said group of instructions, choosing a free host label associated to the computed foreign label now available at said specific location, and entering the computed foreign label and the free host label in the table; and f) resuming the examining step at the computed foreign label and the translating step at said free host label.

According to an embodiment of the invention, if the examined instruction is a CTI to at least one static foreign label, the method comprises the steps of: in step c), choosing at least one free host label associated to the at least one static foreign label and entering in the table the at least one static foreign label and the at least one free host label, translating the foreign CTI into a host CTI to the at least one free host label, and inserting a trap instruction at the at least one free host label; executing step d); and when a trap occurs due to said trap instruction, resuming the examining step at the at least one static foreign label and the generating step at the at least one free host label.

The invention also concerns a method for operating a host computer with foreign binary code comprised of foreign instructions not executable on this computer, comprising the steps of a) storing the foreign code in a memory; b) choosing a memory space wherein host instructions are to be stored; c) examining the foreign instructions in order to find static foreign labels; d) for each static foreign label, checking if it is in a table and, if it is not, choosing an associated free host label and entering the static foreign label and the free host label in the table; e) defining foreign code blocks each starting at a static foreign label that was not found in the table and ending at the first to come of any static foreign label or a foreign Control Transfer Instruction (CTI); f) translating the instructions of each defined foreign block into host instructions having the same effects on the state of the machine as the foreign instructions would have if they were executed on a suitable computer, and storing the host instructions in said memory space at the free host label associated to the starting label of the foreign block; if the last instruction of the foreign block is a CTI to a computed foreign label to be found at a specific location, generating in said host memory space a group of host instructions which, when executed, will read the foreign label at said specific location, search in the table for an associated host label, and either transfer control to the associated host label if it is found, or generate a trap; g) suspending the examining step and executing the newly translated host instructions; h) when a trap is generated due to the execution of said group of instructions, choosing a free host label associated to the computed foreign label now available at said specific location, and entering the computed foreign label and the free host label in the table; and i) resuming the examining step at the computed foreign label.

According to an embodiment of the invention, the traps pass as a parameter the foreign label found at said specific location.

According to an embodiment of the invention, if the instruction to be translated is a CTI to at least one static foreign label, the method comprises the steps of: searching in the table for the at least one host label associated to the at least one static foreign label; and translating the CTI into a host CTI to the associatedat least one host label.

According to an embodiment of the invention, if the CTI is a foreign subroutine call, the method comprises the additional step of generating in said host space host instructions which, when executed, will save at the location in which the foreign subroutine call would save a foreign return label the foreign return label.

According to an embodiment of the invention, the method comprises the steps of: affecting the foreign code memory area as read-only by the host code, whereby, if an attempt is made to write information in a foreign code location by a host code instruction, a trap is generated; if a trap is generated during the execution step due to an attempt to write in a foreign code location, inserting trap instructions at the starting labels of any host block corresponding to the foreign code location; and writing said information in said foreign code location.

According to an embodiment of the invention, the method comprises the steps of: affecting to the foreign program the memory environment it would have on a suitable computer; and inserting the host instructions and the translation table in a free data space of the memory environment of a translator program, this free data space eventually being in the foreign program memory environment.

According to an embodiment of the invention, the most recently used labels of the translation table are saved in a Translation Lookaside Buffer controlled by a suitable cache algorithm.

According to an embodiment of the invention, the most recently used foreign subroutine return addresses are saved with corresponding host addresses in a stack controlled by a suitable cache algorithm.

The foregoing and other objects, features and advantages of the invention will be described in more detail by referring to the attached drawings among which:
Figure 1A shows a partial simplified architecture of a conventional computer;
Figure 1B represents an exemplary program memory environment;
Figures 2 to 5 represent different types of control transfer instructions (CTI's);
Figures 6A and 6B represent exemplary program memory environments according to the invention;
Figure 7 shows a flowchart of a main process according to the invention to operate the computer with foreign code;
Figure 8 shows a flowchart representing how blocks are translated according to a conservative approach in the processes of Figures 10A and 10B;
Figures 9A and 9B show flowcharts of the operation of host code corresponding respectively to the translation of a foreign computed CTI and of a foreign subroutine call;
Figures 10A to 10C show flowcharts of a translating process in the main process of Figure 7;
Figures 11A and 11B show flowcharts representing how blocks are translated according to an aggressive approach in the process of Figure 10B; and
Figure 12 represents a hardware implementation of a translation table.

The translation-execution of a foreign program, that is, the operation according to the invention of a computer with a foreign program not adapted thereto, involves two processes alternately executed. It will be supposed, as an example, that the translation-execution is carried out on a computer such as shown in Figure 1A, controlled by a suitable Operating System which is adapted to operate with virtual memory spaces such as shown in Figure 1B.

The first process is carried out by a translator program. This translator examines the foreign instructions and translates them into host instructions in a host memory space. The translator foresees which foreign instructions would be executed on a suitable foreign computer and only translates those instructions. Two forecast methods will be described in more detail later. The translated host instructions, when executed, have the same effects on the state of the machine as the foreign instructions would have on the foreign computer. Once a problematic foreign instruction is encountered, that is, an instruction from which a further execution forecast is difficult or impossible, the translator generates specific corresponding host instructions and suspends. The problematic instructions are especially Control Transfer Instructions (CTI's) to computed labels (or computed CTI's). Indeed, a computed label is only available, at a specific location indicated by the CTI, when the state of the machine is as it is expected by the foreign program. Therefore, the host code affecting the state of the machine as the foreign code would, has to be run.

The second process thus consists in running the just translated block of host code. This host block necessarily starts with host instructions corresponding to a foreign instruction from which the foreign program would indeed have continued. The specific instructions at the end of the host block corresponding to the computed CTI, hereinafter "Computed Translated CTI", are such that control is returned to the translator when they are executed. These specific instructions, for example, generate a trap (also called "interruption" or "exception") when they are executed. When the execution of the host block is interrupted by a trap, the control is returned to the Operating System which must handle the trap. The Operating System can then switch back to the translator in order to continue the translation. At this point, the host code corresponding to the foreign code which would indeed have been executed up to the computed CTI, has been run. The state of the machine is thus as expected by the foreign program and the computed label is available at its specific location. The translator can therefore continue examining and translating the new foreign instructions at this computed label, which is where the foreign program "intended" to continue.

It is desirable for an optimal translation-execution that a Computed Translated CTI does not each time generate a trap. A table is therefore provided in memory, containing foreign to host label correspondence pairs. The Computed Translated CTI is such that, when executed, it finds the available computed foreign label and checks if it has been entered with a corresponding host label in the table. If the computed foreign label exists, it means that the foreign code at the computed foreign label has already been translated to host code at the corresponding host label. The Computed Translated CTI then transfers control to the corresponding host label and the execution of the host code is not interrupted. The Computed Translated CTI only generates a trap if the computed foreign label does not exist in the table. If this is the case, the translator regains control, associates an unoccupied host label, to the computed foreign label, enters both labels in the table and starts translating the foreign code at the computed foreign label into host code at the associated host label.

The table will also be consulted and, if necessary, updated for each non-computed CTI (a CTI to a static label). When the translator reaches a CTI to a static foreign label, it checks if this static foreign label has been entered with a corresponding host label in the table. If the static foreign label does not exist, the translator affects a host label, as above, to the static foreign label and enters both labels in the table. CTI's to static labels are treated differently according to the forecast approaches used by the translator, which will be described later.

### PREFERRED MEMORY ENVIRONMENTS

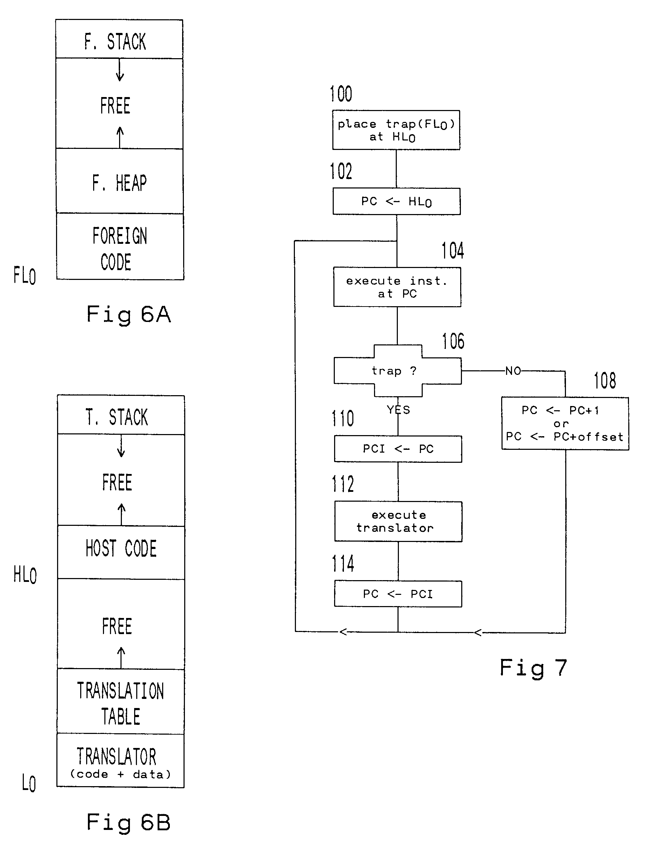

Figure 6A represents a preferred memory environment or virtual space for the foreign program. This environment is exactly the memory environment the foreign program would have when executed on an adapted foreign computer. The foreign computer to which the foreign program is intended is generally known (in some architectures, the binary programs even start with data identifying the computer family to which the program is intended). Therefore, the correct memory environment for the foreign code can always be created.

The foreign code is, for example as in figure 1B, located at the bottom of the virtual space and starts at foreign label FL₀. The remaining memory space is data space. A heap space is located at the bottom of the data space and a stack space is located at the top of the data space. The remaining data space is free.

Figure 6B represents a preferred virtual space for the translator, which is distinct from that of the foreign program. This translator virtual space is a conventional space for the host computer, for example, as that of figure 1B. The translator code is located at the bottom of the translator virtual space and starts at label L₀. The remaining memory space is data space. A heap space, mainly corresponding to the forementioned translation table, is located at the bottom of the data space. A translator stack space is located at the top of the data space. A host code space where the translator writes host instructions is created in the free translator data space and starts at host label HL₀.

When translated code executes, all data accesses (reads and writes) will be such that they affect the foreign space (Fig. 6A) and not the translator space (Fig. 6B). However, instruction fetches will be done from the host code space (Fig. 6B). One way to achieve this is to use an adapted MMU that differently maps data accesses and instruction fetches. Another way is to use a conventional MMU, but to also map the host code areas into the foreign space (Fig. 6A), with execute-only (or at least read-only) permission. As will be seen later, some host code instructions will need read-access to the translation table when executing. To achieve this, either the adapted MMU allows these instructions to access data from the translator space (Fig. 6B), or -if using conventional hardware- the translation table is also mapped into the foreign space (Fig. 6A) with read-only protection.

As it will be seen hereafter, the host code space and the translation table space grow as the translation-execution of the foreign code proceeds. Enough free data space will therefore be provided initially for the translation table and host code spaces to grow freely.

The host code corresponds to translated portions of the foreign code. Nevertheless, it will be noted that even in the very exceptional case where all the foreign code is translated into host code, the host code cannot be considered as a mere translation of the foreign code. Indeed, a first reason for this is that, if the host code were a translation, it would execute in its own virtual space corresponding, for example, to that of Figure 1B, that is, the host code would expect to find all the data space above the code space and not some of it under the starting label HL₀ as in Figure 6. A second reason is that the host code constantly refers to the translation table while there is no equivalent of such action in the foreign code. A third reason is that, in cases where the foreign program is self-modifying or performs arithmetic operations on its code, the foreign code must always be present in memory when the translated host code is executed.

### MAIN PROCESS OF TRANSLATION-EXECUTION

Figure 7 shows a flowchart of the the main process according to the invention corresponding to the translation-execution of a foreign program. This main process is carried out by a program which can either be part of a suitable Operating System or a specific program. In the former case, the Operating System would, instead of displaying an error message saying that the program attempted to be run is not executable, initiate the translation-execution. In the latter case, the user would have to first execute the specific program and indicate therein which foreign program he wants to translate-execute. In both cases, the foreign instruction set is either recognized automatically, for example by the forementioned identification data, or the user would have to indicate to which computer the foreign program is intended in order to initiate the process with a suitable translator program.

In the following, a paragraph describing the operations carried out in a flowchart block will be preceded by the reference number designating the flowchart block.

100. The main process starts. On a first translation-execution, a trap instruction (or any other instruction causing control to be transferred to the translator) is inserted at the host label HL₀ where the host code is chosen to start. A trap instruction can pass constant parameters;as shown in block 100, the trap instruction placed at label HL₀ will pass as parameter the label FL₀ where the foreign program starts. An additional parameter will be needed which is the value of the Program Counter PC when the trap occurs. When a process is interrupted either by a trap or by the main process, the value of the PC is generally saved in a memory location, hereafter PCI (PC of Interruption).

If it is not the first translation-execution, previously translated host code, stored for example on disk, is loaded at label HL₀ instead of trap instructions, provided that host code always starts at the same label HL₀.

102. The execution of the host code is to be started. The PC is affected with label HL₀, whereby the next executed instruction is at label HL₀, in the host code.

104. The instruction pointed at by the PC (the current instruction) is executed.

106. Either the current instruction is executed normally or a trap occurs. The trap can occur either if the instruction is a specific trap instruction placed there on purpose or if the instruction attempts to carry out an illegal operation such as writing in a read-only protected memory location (performing a protection violation).

108. The current instruction is executed normally. The PC is normally modified to point to the next instruction to be executed at block 104. If the current instruction is not a CTI, the PC is incremented by 1. If the current instruction is a CTI, the PC is incremented by the offset provided by the CTI, or otherwise modified appropriately.

If the instruction is a program end instruction, the translation-execution process is terminated. However, before terminating, the up to then generated host code can, unless the foreign program is self-modifying, be saved on disk in order to use it for a next translation-execution.

110. A trap occurs. The PC is saved at location PCI.

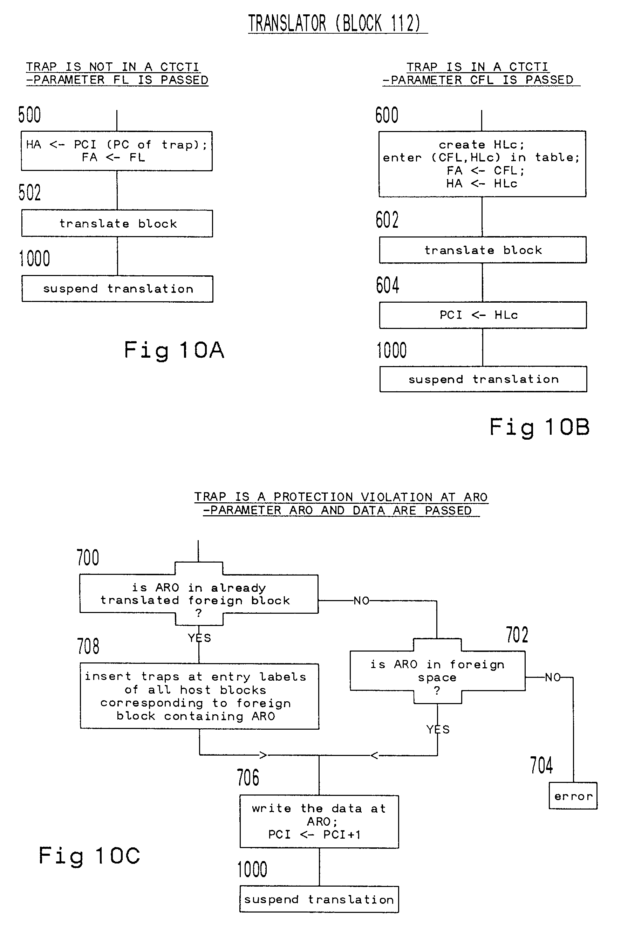

112. The translator is executed and receives the trap parameters either directly or through the main process. Depending on the trap parameters or type, the translator will behave in either one of three different ways corresponding to the flowcharts of Figures 10A to 10C described later.

114. The translator suspends. The state of the PC is restored (the contents of location PCI are transferred back to the PC) and the execution is resumed at block 104 at the location where the trap occurred, i.e. at the host label which corresponds to the foreign label where the execution of the foreign program would indeed continue.

The translator will either have replaced the instructions that generated the trap by new host instructions corresponding to foreign instructions, or will have removed the cause of the trap. This will be described later.

In some cases, also discussed later, the trap occurs upon executing an instruction not corresponding to a foreign instruction, the translator therefore modifies the contents of location PCI in order to continue execution at a suitable location where new host instructions have been inserted.

The translator of block 112 can operate according to two different forecast approaches. A first approach, so-called "conservative" approach, will be described immediately. A second approach, so-called "aggressive" approach, will be discussed later.

### TRANSLATION ACCORDING TO THE "CONSERVATIVE" APPROACH

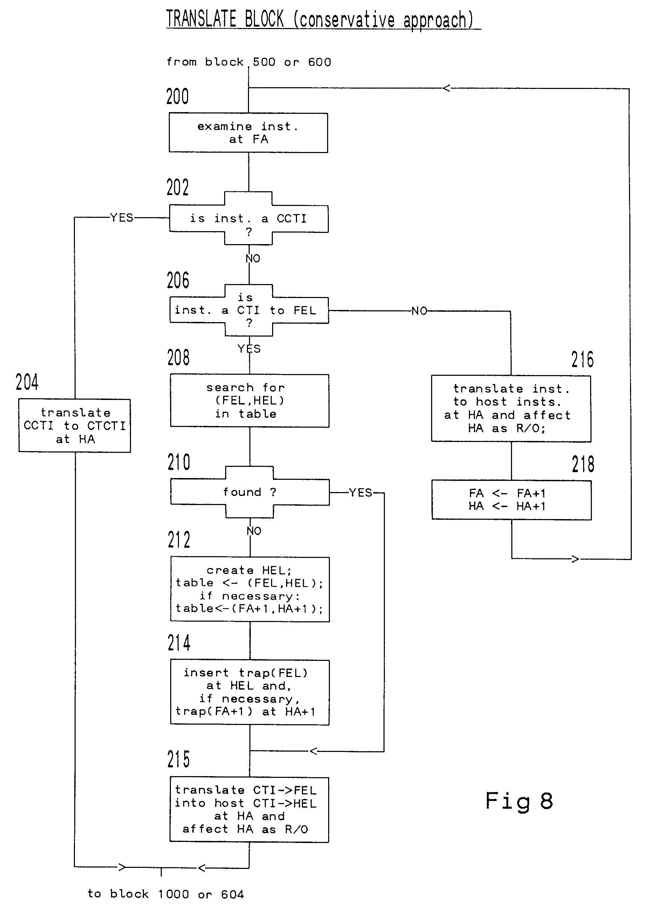

Figure 8 represents a flowchart entitled "translate block" corresponding to the conservative approach of the translator. This flowchart is entered at blocks 502 and 602 of the flowcharts of Figures 10A and 10B described later, where current foreign address FA and current host address HA are initialized. In order to simplify the comprehension of this flowchart and the following, it is supposed that if address FA points to a foreign instruction, address FA+1 points to the next. Similarly, address HA will point to a group of one or more host instructions corresponding to one foreign instruction, and address HA+1 will point to the next group of host instructions.

200. The translator examines the foreign instruction at current foreign address FA.

202. It is checked whether the instruction is a computed CTI (CCTI).

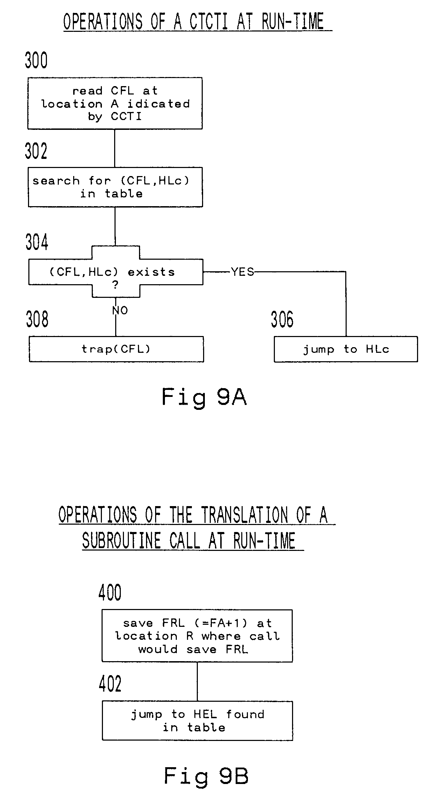

204. The instruction is a CCTI. The translator generates at the current host address HA a group of instructions corresponding to the forementioned Computed Translated CTI (CTCTI). The operation of a CTCTI is described in more detail by referring to the flowchart of Figure 9A.

The flowchart is then exited and the translator continues according to its initial flowchart of Figure 10A or 10B.

206. The instruction is not a CCTI. It is checked whether the instruction is a CTI.

208. The instruction is a CTI to a foreign entry label FEL. The translator searches in the previously mentioned translation table (Fig. 6) for a foreign-host label correspondence pair (FEL, HEL).

210. Either the pair is found in the table or not.

212. The pair is not found. The foreign CTI is a CTI to a yet unencountered foreign entry label FEL. The translator chooses a corresponding host entry label HEL in a free memory area. This label can be arbitrarily chosen but is preferably chosen at the end of a previously translated host code block, provided that the last instruction of this block is not a conditional jump or a subroutine call; the translated blocks will thus be less spread about in memory. The newly obtained correspondence pair (FEL, HEL) is then entered in the translation table. If the CTI is a conditional jump instruction or a subroutine call, the pair (FA+1, HA+1) is also entered in the table if label FA+1 is not already in the table. Indeed, label FA+1 is where the conditional jump would transfer to if its condition is false or where the subroutine would return to.

214. Trap instructions are inserted at host label HEL. These trap instructions are such that, when executed, they pass as parameter the foreign label FEL where the foreign CTI transfers control to. This parameter will be transferred to the translator which will be able to continue the translation of the foreign code at the point where it had previously terminated. If the CTI is a conditional jump instruction or a subroutine call, trap instructions passing parameter FA+1 will be inserted at host label HA+1 if label FA+1 was not in the table.

215. A host label HEL corresponding to foreign label FEL was either found in the table or created. The current CTI is translated into a corresponding host CTI to label HEL at address HA. If the CTI is a subroutine call, it is translated slightly differently, as will be described by referring to Figure 9B.

The flowchart is then exited.

216. The foreign instruction examined at block 200 is not a CTI. The instruction is translated at current host address HA into corresponding host instructions as will be detailed hereafter. In some cases, current address HA could correspond to an occupied location, for example if it corresponds to host code. The translator first checks the status of the location at address HA+1 before writing anything at address HA. If the location at address HA+1 is already occupied, the translator will insert at address HA a jump instruction to a label L at an available location, insert the translation of the current instruction at label L, and affect the current address HA with label L.

218. The current foreign address FA and current host address HA are incremented by 1 and the process is resumed at block 200 for the new foreign instruction pointed at by FA.

According this translation approach, a block translated in one pass is defined as the code comprised between an entry label to which a CTI transferred to and the first CTI to come after the entry label.

An advantage of this approach is that the translator only translates the foreign instructions, the execution of which would be sure on the foreign computer (and not data that may eventually lie after a conditional jump, the condition of which never turns out to be false). Indeed, the translator starts translating foreign code at a location where the foreign program indeed "intended" to continue and suspends upon reaching any type of CTI. This CTI is translated into host instructions generating a trap at run-time and passing to the translator the next location where the foreign program "intends" to continue.

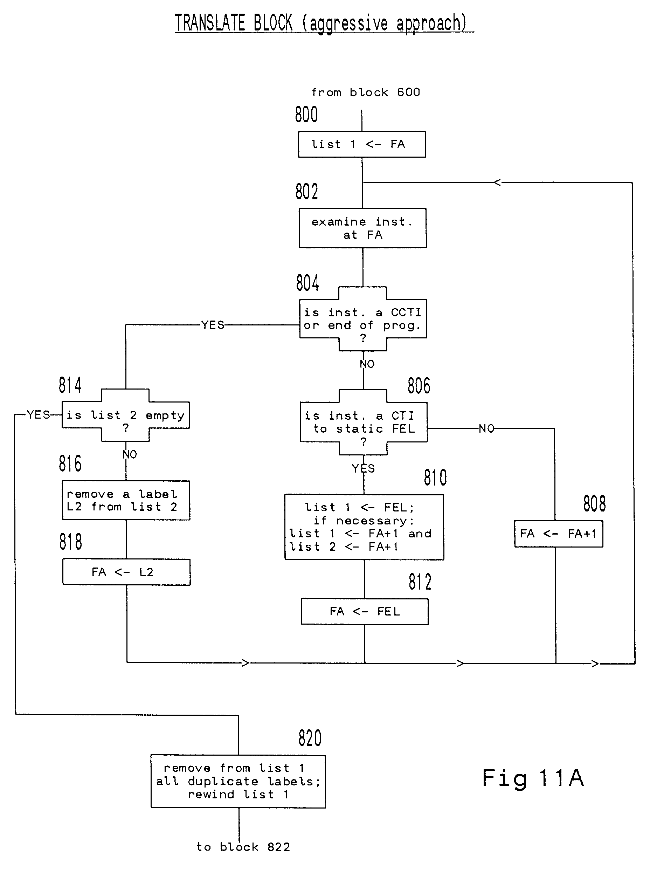

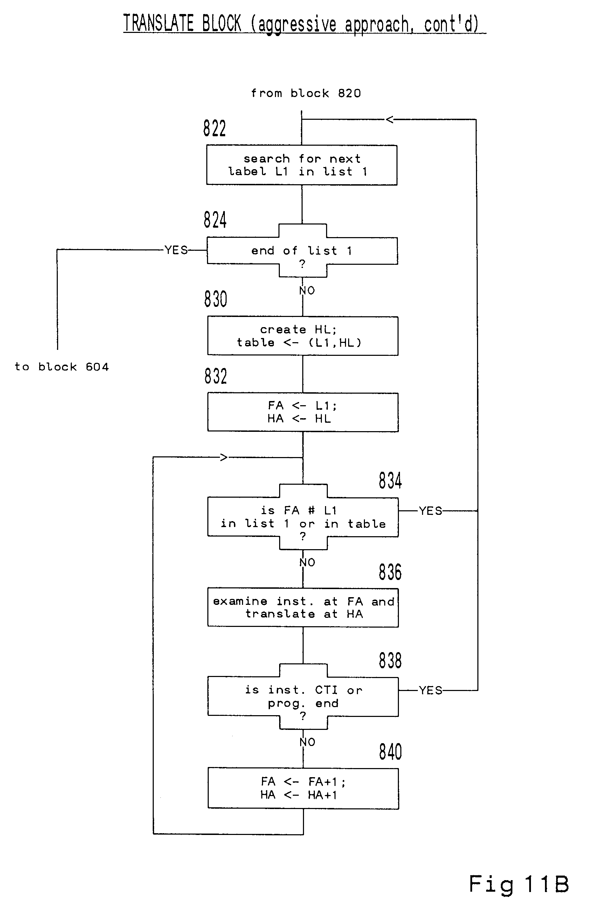

However, if in a foreign block control happens to enter later on at a new label within the block, a new block is defined comprising the code between the new label and the ending CTI. This means that one foreign block is translated in as many additional host blocks as there are new entry labels encountered within the foreign block. Therefore, the size of the translated code will be larger than the foreign code. An "aggressive" translation approach, described later by referring to Figures 11A and 11B, reduces this multiple translation of already translated code.

### INSTRUCTION TRANSLATION

The instruction translation in block 216 is carried out as follows. The foreign instructions are recognized by the translator according to the instruction set definition document of the foreign computer. A foreign instruction is translated into host instructions having the same effects on the machine state as the foreign instructions would have if they were executed on the foreign computer. Foreign instructions manipulating specific data and foreign addresses corresponding to specific locations are translated into host instructions manipulating in the same way the same data and the same locations. A foreign instruction performing arithmetic operations on the contents of specific registers of the CPU will be translated into host instructions performing equivalent operations on the same registers if the host register set comprises at least as many registers as the foreign register set (if this is not the case, the host instructions will use specific memory locations replacing the missing registers). It is also possible that the registers of the foreign register set are larger than the host registers; in this case, two specific host registers, for example, will correspond to each large foreign register...

The fact that the host instructions have the same effects on the state of the machine as the foreign instructions would have is an important aspect of the invention. Indeed, besides the fact that it is needed to provide the expected results to the user, portions of the foreign code might compute labels from anything that the foreign code can act upon. Therefore, if foreign instructions would modify a given part of the state of the machine and if other foreign instructions would use this modified part to compute a label, the translated host instructions will do exactly the same and will properly compute the foreign label. Moreover, if foreign instructions would perform arithmetic operations on the foreign code itself, such as checksums, the corresponding host instructions will perform the same operations on the same foreign code rather than host code and the results will thus be as expected by the foreign program.

The translator will always suspend upon reaching a foreign computed CTI to a label stored at a specific known location. As the newly translated host block is then executed, this label will be computed. If the host block ends by a trap on executing the host Computed Translated CTI (CTCTI) corresponding to the foreign computed CTI, the computed label is available to the translator at the specific known location. In a preferred embodiment, described hereunder, the CTCTI provides the computed label to the translator.

### Translation Of A Computed CTI

Figure 9A shows the flowchart corresponding to the operations performed by a Computed Translated CTI which is the host code generated as a translation of a computed CTI in block 204. This flowchart corresponds to the operations performed at run-time according to a preferred embodiment by a CTCTI and does not correspond to the translation steps in flowchart block 204 which are only to write at the current host address HA the CTCTI.

300. The computed foreign label CFL is fetched from the known location A which was indicated by the foreign computed CTI examined at translation time. It is recalled that this location A is either a register or a memory location.

302. A label pair (CFL, HLc) is searched for in the translation table.

304. The pair is found or is not found.

306. The pair is found. An unconditional jump to the host label HLc corresponding to the computed foreign label CFL is achieved.

308. The pair is not found. A trap (or other form of control transfer to the translator) passing as a parameter the computed foreign label CFL is executed, which suspends the execution of the host code, initiates the translator and passes label CFL thereto. The translator will then execute according to the flowchart of figure 10B and start translating the foreign code at label CFL.

### Translation Of A Subroutine Call

Figure 9B shows the flowchart of the operations performed by the host instructions generated in flowchart block 215 for a foreign subroutine call to a foreign entry label FEL.

400. The return label FRL of the foreign subroutine call, which is known at translation time (it corresponds to the address of the subroutine call plus 1), is saved at the location R where the foreign subroutine call would indeed save this return label. It is recalled that location R is either a register or the address of a location in memory.

402. An unconditional jump instruction transfers control to the host entry label HEL created in block 212 or found in the table in block 208 at translation time. If the subroutine call is a call to a computed label, a Translated Computed CTI is executed instead as in steps 302 through 308.

The subroutine return is a computed CTI using the label stored at location R; it is therefore treated in block 204 as other computed CTI's.

Figures 10A to 10C represent three different flowcharts corresponding to what the translator in block 112 of Figure 7 does according to the trap that occurred when executing the current instruction at block 104.

### Translation Process When A Trap Due To A Static CTI Occurs

Figure 10A shows a flowchart of the operations carried out by the translator in block 112 when a trap occurs at a host label where a host static CTI transferred control to. The trap passes a parameter FL which is the foreign label where the translator last stopped examining the foreign instructions and where the foreign program "intended" to continue.

500. The value of the PC when the trap occurred (stored at location PCI) is assigned to the current host address HA and the foreign label FL is assigned to the current foreign address FA.

502. The foreign instructions are translated according to the flowchart of Figure 8 starting at foreign label FL and inserting the corresponding host instructions starting from address HA, whereby the trap instructions at address HA are overwritten.

1000. The translator suspends and execution of the host code is resumed at the PC (still stored at location PCI) where the trap occurred, which now points at new host instructions that do not generate a trap and correspond to the foreign instructions which would then be executed.

### Translation Process When A Trap Occurs In A Computed Translated CTI

Figure 10B shows a flowchart of the operations carried out by the translator in block 112 when the trap at block 104 occurs in a Computed Translated CTI. At run time, the trap instructions (corresponding to block 308 in Figure 9A) pass a parameter which is the computed label CFL fetched by the instructions of block 300 in Figure 9A. Label CFL is where the foreign program "intended" to continue. The fact that this trap occurred means that there was no correspondence found in the table for CFL, thus that yet untranslated foreign instructions are at label CFL.

600. A new host label HLc corresponding to label CFL is chosen as mentioned for block 212, Figure 8. The new correspondence pair (CFL, HLc) is entered in the translation table. The current host address HA is affected with the new host label HLc and the current foreign address FA is affected with label CFL.

602. The foreign instructions are translated starting from label CFL and the corresponding host instructions are inserted starting from host address HA. The translation can either occur according to the conservative approach of Figure 8 or to the aggressive approach described later with the flowcharts of Figures 11A and 11B.

604. The PC value stored at location PCI is affected with the new host label HLc.

1000. The translator suspends whereby the execution of the host code continues, not at the location where the trap occurred (old PCI), but at the location HLc (new PCI) where the newly translated host code is found.

### Translation Process When A Protection Violation Trap Occurs

Figure 10C shows a flowchart of the operations carried out by the translator when the trap is due to a read-only protection violation. This kind of trap occurs when an instruction attempts to write in a read-only protected memory location and conventionally passes as parameters the address ARO of the violated location and the data that was to be written in this location.

In order to detect whether foreign code would beselfmodifying, the foreign code space is, according to the invention, initially affected as read-only for the host code. However, the foreign code is not affected as read-only for the translator.

700. It is checked whether the violated location at address ARO is in an already translated foreign block.

702. The violated location is not in an already translated foreign block. It is checked whether the violated location is in the foreign code space.

704. The violated location is not in the foreign code space. This means that the foreign code would attempt to write in an area where it should not write even if executed on a suitable computer. The whole translation-execution process is then halted with an error indication.

706. The violated location is in the foreign code space. The data (passed as a parameter to the translator by the trap) that the violating host instruction wanted to write is then written in this location by the translator. The value of location PCI (PC of the violating instruction) is incremented in order to not re-execute the violating instruction at next run-time.

708. The violated location is in an already translated foreign block. This means that the foreign program would be self modifying. A trap is inserted at the entry label of the corresponding host block, passing as a parameter the associated foreign entry label. Therefore, when the host block is entered next time at run-time, control will be returned to the translator to retranslate the foreign block that has been modified.

If several host blocks correspond to the foreign block including the violated location, a trap is inserted at the entry label of each such host block.

The translator then continues the process in block 706, described above.

1000. The translator suspends, whereby the execution of the host code is continued at the instruction following the violating instruction (PC : incremented PCI).

The modified foreign code will be retranslated normally once the host blocks corresponding to the modified code are entered.

In order to enter one of the flowcharts of Figures 10A to 10C, it must be differentiated why the trap occurred. Therefore, the trap instructions can be such that they pass an extra parameter when executed indicating why the trap occurred, or can simply generate different types of traps.

### TRANSLATION ACCORDING TO THE "AGGRESSIVE" APPROACH

As previously mentioned, the conservative translation approach has the drawback of eventually generating, for one foreign block, a plurality of host blocks with common portions of code. The aggressive approach reduces the amount of host blocks generated for one foreign block.

Figures 11A and 11B show an exemplary flowchart, entitled "Translate Block", of the translation process according to the aggressive approach, and which is entered in flowchart block 602 of Figure 10B. The flowchart of Figure 10A is not used according to the aggressive approach except for the first trap instruction placed at label HL₀.

Before describing the flowchart in detail, the aggressive approach will first be summed up.

A translation according to the aggressive approach consists in two steps. The first step starts at an entry label, which is either the program starting label or a computed label where the foreign program "intended" to continue. It consists in examining the foreign code starting from this entry label in order to find all the possible routes which the foreign program could take if it were executed on a suitable foreign computer. Therefore, all the possible foreign static labels coming after the entry label are detected. For each static label, if it is not in the table, a corresponding host label is created and the static label and created host label are entered in the table. The step ends when no more foreign static labels can be found, which means that each found route either ends by a CTI to a computed label or by a program end instruction.

The second step is translating all the untranslated sub-blocks defined by the code comprised between a foreign static label which was not found in the table and the next to come of a CTI or a foreign label entered or existing in the table. These sub-blocks are then translated into corresponding host code subblocks at the created corresponding host labels.

By operating in this way, many sub-blocks of a foreign block according to the conservative approach can be found and later be translated separately instead of having to trap and retranslate already translated portions of the foreign block.

The flowchart of Figures 11A and 11B will now be described. The current foreign address FA is initially affected in flowchart block 600 of Figure 10B with a label passed as a parameter by a trap. Except for the first time when this label is the starting label FL₀ of the foreign code, it is a newly found computed label CFL passed by a CTCTI trap instruction corresponding to block 308, Figure 9A.

800. The current foreign address FA (label CFL or FL₀) is entered in a list 1.

802. The current foreign instruction at current address FA is examined.

804. It is checked whether or not the current instruction is a computed CTI or a program end instruction.

806. The current instruction is neither a computed CTI nor a program end instruction. It is checked whether the current instruction is a CTI to a static label FEL.

808. The current instruction is not a CTI to a static label. The current foreign address FA is incremented by 1 and the operations are resumed at block 802 to examine the next instruction.

810. The current instruction is a CTI to a static label FEL. Label FEL is entered in list 1 if it is not already present in this list. If the CTI is conditional or if it is a subroutine call, address FA+1, which is the second label of the conditional CTI or the return label of the subroutine, is entered in list 1 and in an additional list 2 if it is not already present in these lists.

812. The current foreign address FA is affected with static label FEL and the operations are resumed at the instruction examination block 802.

During the process, in blocks 810 and 812, list 1 is progressively filled with all the encountered static foreign labels corresponding to entry labels of distinct sub-blocks. List 2 is progressively filled with labels corresponding to entry labels of distinct sub-blocks which must yet be examined.

814. The current instruction is a computed CTI or a program end instruction. It is checked whether list 2 is empty.

816. List 2 is not empty. This means that foreign sub-blocks yet to be examined remain. An entry label L2 is removed from list 2.

818. The current foreign address FA is affected with entry label L2 and the examination of the sub-block starting at label L2 is initialized at block 802.

820. List 2 is empty. All the sub-blocks have been examined. All the labels in list 1 which are already in the translation table are removed from the list. Indeed, if a label of list 1 is in the table, the corresponding foreign sub-block has already been translated. List 1 is rewinded in order to start successively retrieving its labels.

822. The next entry label L1 in list 1 is retrieved. If it is the first time block 822 is reached, label L1 is the first label.

824. It is checked whether the end of list 1 is reached. If yes, it means that all examined sub-blocks have been translated. The flowchart is exited and the translator continues at block 604 of the initial flowchart of Figure 10B.

830. List 1 is not at its end. A host label HL corresponding to foreign label L1 is chosen as mentioned for block 212, Figure 8. The label pair (L1, HL) is entered in the translation table.

832. The current foreign address FA is affected with label L1 and the current host address is affected with label HL. The translation of the new sub-block starting at label L1 is initiated at block 836.

834. It is checked whether the current foreign address FA is a label in list 1 or in the table; of course this is not done the first time block 834 is entered as label L1 is necessarily in list 1. If address FA is in list 1 or in the table, it means that a new sub-block is reached and therefore that the end of the current sub-block is reached. The translation is interrupted and the operations are resumed at block 822 where the next sub-block entry label L1 is retrieved in list 1.

836. The current foreign address FA is not in list 1 nor in the table. The foreign instruction at address FA is examined and translated into corresponding host instructions at current host address HA. This translation is carried out as mentioned for blocks 204, 215 and 216, Figure 8.

838. It is checked whether the instruction is a CTI. If yes, the end of the sub-block is reached and the next sub-block entry label L1 is retrieved at block 822.

840. The instruction at address FA is not a CTI. Current foreign address FA and host address HA are incremented by 1 and the translation continues at block 834.

### HARDWARE IMPLEMENTATION OF THE TRANSLATION TABLE

The entire simulated execution process can be carried out by software in a conventional computer, for example as shown in Figure 1A. Nevertheless, each access to the translation table, especially upon executing Computed Translated CTI's, will then slow down the process.

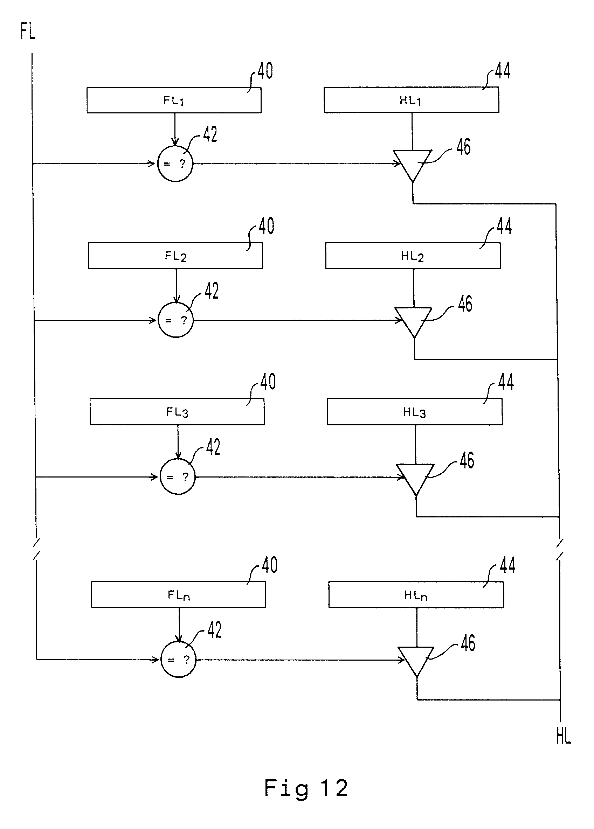

Figure 12 shows a hardware implementation of the translation table which will allow a much faster access to the label correspondence pairs. The translation table is in the form of a Translation Lookaside Buffer (TLB) which can be implemented in the CPU. This TLB comprises a first set of registers 40, some of which store a foreign label FLᵢ (i being comprised between 1 and n, n being the number of registers 40). Each register 40 is associated to a comparator 42 which compares the contents of the register to a value FL provided via an input bus to the TLB. To each register 40 is also associated a register 44 of a second set of registers, which contains the corresponding host label HLᵢ. A tri-state buffer 46 controlled by the corresponding comparator 42 is associated to each register 44. The output of each tri-state buffer 46 is connected to a bus which provides the host label HL corresponding to the input foreign label FL if this foreign label FL is in one of the registers 40.

As the translation table can be rather large, the TLB will only contain part of the translation table and be suitably controlled by a cache controller which can be implemented in the CPU. The "Most Recently Used" (MRU) cache algorithm is an example of how this TLB can be managed. If a label pair is not found in the TLB, the cache algorithm will, as conventional, replace the least recently used label pair in the TLB by the not found label pair which must then be searched for in the translation table stored in memory.

In order to optimize the use of the TLB, a small first-in last-out buffer or stack can be associated to the TLB for storing only the subroutine return label correspondence pairs.

The above TLB and stack can be easily implemented by those skilled in the Art in known CPU architectures. Moreover the functions described with the flowcharts, especially those performed by a Computed Translated CTI, can also be hardware implemented.

In Figures 6A and 6B, the host code has been described as being in the virtual space of the translator. However, the host code can be anywhere else provided that, when it is run, it acts upon the virtual space of the foreign program. The host code could even be in a free area of the virtual space of the foreign program itself, if there is no risk that the foreign program might attempt to read or write in the area occupied by the host code; this would simplify the accesses by the host code to the foreign program's virtual space.

The described flowcharts have been given as examples. Those skilled in the art will be able to find many other flowcharts by which the invention can be achieved and, especially, to optimize the given flowcharts.

## Claims

1. A method for operating a host computer with foreign binary code comprised of foreign instructions not executable on this computer, characterized in that it comprises the steps of:
a) storing the foreign code in a memory;
b) choosing a memory space wherein host instructions are to be stored;
c) examining the foreign instructions, translating them into host instructions having the same effects on the state of the machine as the foreign instructions would have if they were executed on a suitable computer, and storing the host instructions in said memory space;
upon reaching a Control Transfer Instruction (CTI) to a computed foreign label (CFL) to be found at a specific location (A, R), generating in said memory space a group of host instructions which, when executed, will
- read the foreign label at said specific location,
- search in a table for an associated host label (HLc), and
- either transfer control to the associated host label (HLc) if it is found, or generate a trap;
d) suspending the examining step and executing the newly translated host instructions;
e) when a trap is generated due to the execution of said group of instructions, choosing a free host label (HLc) associated to the computed foreign label (CFL) now available at said specific location, and entering the computed foreign label and the free host label in the table; and
f) resuming the examining step at the computed foreign label (CFL) and the translating step at said free host label (HLc).

2. A method as claimed in claim 1, comprising, if the examined instruction is a CTI to at least one static foreign label (FEL, FL+1), the steps of:
- in step c), choosing at least one free host label (HEL, HL+1) associated to the at least one static foreign label and entering in the table the at least one static foreign label and the at least one free host label (HEL; HL+1); translating the foreign CTI into a host CTI to the at least one free host label; and inserting a trap instruction at the at least one free host label;
- executing step d), and
- when a trap occurs due to said trap instruction, resuming the examining step at the at least one static foreign label (FEL) and the generating step at the at least one free host label (HEL).

3. A method for operating a host computer with foreign binary code comprised of foreign instructions not executable on this computer, characterized in that it comprises the steps of:
a) storing the foreign code in a memory;
b) choosing a memory space wherein host instructions are to be stored;
c) examining the foreign instructions in order to find static foreign labels;
d) for each static foreign label, checking if it is in a table and, if it is not, choosing an associated free host label and entering the static foreign label and the free host label in the table;
e) defining foreign code blocks each starting at a static foreign label that was not found in the table and ending at the first to come of any static foreign label or a foreign Control Transfer Instruction (CTI);
f) translating the instructions of each defined foreign block into host instructions having the same effects on the state of the machine as the foreign instructions would have if they were executed on a suitable computer, and storing the host instructions in said memory space at the free host label associated to the starting label of the foreign block;
if the last instruction of the foreign block is a CTI to a computed foreign label (CFL) to be found at a specific location, generating in said host memory space a group of host instructions which, when executed, will
- read the foreign label at said specific location,
- search in the table for an associated host label (HLc), and
- either transfer control to the associated host label (HLc) if it is found, or generate a trap;
g) suspending the examining step and executing the newly translated host instructions;
h) when a trap is generated due to the execution of said group of instructions, choosing a free host label (HLc) associated to the computed foreign label (CFL) now available at said specific location, and entering the computed foreign label and the free host label in the table; and
i) resuming the examining step at the computed foreign label (CFL).

4. A method as claimed in claim 1 or claim 3, wherein the traps pass as a parameter the foreign label found at said specific location.

5. A method as claimed in claim 3, comprising, if the instruction to be translated is a CTI to at least one static foreign label (FEL, FL+1), the steps of:
- searching in the table for the at least one host label (HEL, HL+1) associated to the at least one static foreign label; and
- translating the CTI into a host CTI to the associatedat least one host label.

6. A method as claimed in claim 1 or claim 3, comprising, if the CTI is a foreign subroutine call, the additional step of generating in said host space host instructions which,
when executed, will save at the location in which the foreign subroutine call would save a foreign return label (FRL) the foreign return label.

7. A method as claimed in claim 1 or claim 3, comprising the steps of:
- affecting the foreign code memory area as read-only by the host code, whereby, if an attempt is made to write information in a foreign code location by a host code instruction, a trap is generated;
- if a trap is generated during the execution step due to an attempt to write in a foreign code location, inserting trap instructions at the starting labels of any host block corresponding to the foreign code location; and
- writing said information in said foreign code location.

8. A method as claimed in claim 1 or claim 3, comprising the steps of:
- affecting to the foreign program the memory environment it would have on a suitable computer; and
- inserting the host instructions and the translation table in a free data space of the memory environment of a translator program, this free data space eventually being in the foreign program memory environment.

9. A method as claimed in claim 1 or claim 3, wherein the most recently used labels of the translation table are saved in a Translate Lookaside Buffer (TLB) controlled by a suitable cache algorithm.

10. A method as claimed in claim 9, wherein the most recently used foreign subroutine return addresses are saved with corresponding host addresses in a stack controlled by a suitable cache algorithm.
